# EUROPEAN PATENT APPLICATION

(11) **EP 1 041 552 A1**
(43) Date of publication of application: **04.10.2000**
(21) Application number: 00302544.2
(22) Date of filing: 28.03.2000
(51) Int. Cl.: G11B 17/22

(54) **Recording medium reproducing apparatus**

(30) Priority: 31.03.1999 JP 9076499
(71) Applicant: Pioneer Corporation, Meguro-ku, Tokyo (JP)
(72) Inventor: Furukawa, Kiyoshi, c/o Pioneer Corporation, Kawagoe-shi, Saitama (JP); Kobayashi, Hiroyuki, c/o Pioneer Corporation, Kawagoe-shi, Saitama (JP); Kubota, Hidetsugu, c/o Pioneer Corporation, Kawagoe-shi, Saitama (JP); Abe, Takuya, c/o Pioneer Corporation, Kawagoe-shi, Saitama (JP); Takahashi, Masakaza, c/o Pioneer Corporation, Kawagoe-shi, Saitama (JP); Watarihana, Hideaki, c/o Pioneer Corporation, Kawagoe-shi, Saitama (JP); Goto, Hiroki, c/o Pioneer Corpration, Kawagoe-shi, Saitama (JP); Nishio, Yoshimichi, c/o Pioneer Corporation, Kawagoe-shi, Saitama (JP); Suzuki, Yasutaka, c/o Pioneer Corporation, Kawagoe-shi, Saitama (JP); Matsuo, Kazunori, c/o Pioneer Corporation, Kawagoe-shi, Saitama (JP); Takahashi, Teruo, c/o Pioneer Corporation, Kawagoe-shi, Saitama (JP)
(74) Representative: Haley, Stephen

(57) **Abstract**

A recording medium reproducing apparatus in which a plurality of recording media such as optical disks can be accommodated, and one recording medium is selected from the accommodated recording media and reproduced. In the recording medium reproducing apparatus, one empty recording medium placement portion (201) in a plurality of recording medium placement portions is made to be in the insertion waiting state successively to the insertion of a disc in the recording medium reproducing apparatus, and its accommodation in another recording medium placement portion.

## Description

The present invention relates to a recording medium reproducing apparatus in which a plurality of recording media such as optical disks can be accommodated, and one recording medium is selected from the accommodated recording media and reproduced.

Conventionally, in a car disk player, an apparatus in which about 6 optical disks are accommodated in 1 DIN size, and one optical disk is selected from those optical disks and can be reproduced, is known.

In such a disk reproducing apparatus, one insertion opening (slot opening) to insert an optical disk into the apparatus main body or to eject the optical disk from the apparatus main body to the outside, is provided. In the apparatus main body, a plurality of trays to collectively accommodate a plurality of optical disks, and a clamping device and an optical pick-up by which the recording information is optically read out while the optical disk is being held, are housed.

The plurality of trays are arranged in the vicinity of the insertion opening in a state that these are stacked in the up and down directions in the apparatus main body, and when these trays are appropriately moved up and down, the desired tray can be positioned to the insertion opening in the direction of height, and by positioning the desired tray to the clamp mechanism and the optical pick-up, the operator can insert the optical disk from the insertion opening and can accommodate it in the desired tray.

According to that, when the operator designates an empty (that is, no disk is accommodated) tray, the designated tray is automatically positioned to the insertion opening, and corresponding to it, a door provided in the front surface of the insertion opening is opened. Next, when the operator inserts the optical disk from the insertion opening, after the optical disk is drawn in the apparatus main body from the insertion opening by so-called loading movement, the optical disk is accommodated in the designated tray which is already positioned at the insertion opening. Then, after the accommodation is completed, all of the plurality of trays are automatically moved to a predetermined height while holding the optical disk, and are in the waiting state. When this movement is repeated, the plurality optical disks are made to correspond to respective trays and can be collectively accommodated.

Further, in the case where the optical disks are accommodated, when the operator designates a desired optical disk, the tray in which the recording medium is accommodated, is automatically moved in the up and down directions, and positioned to the clamp mechanism and optical pick-up, and the reading out of the recording information by the optical pick-up is conducted.

Further, when the operator designates to eject the optical disk which is already accommodated, after the tray in which the designated optical disk is accommodated, is automatically positioned to the insertion opening, the optical disk is ejected from the tray to the insertion opening by so-called unloading movement.

According to this, the disk reproducing apparatus in the related art can accommodate a plurality of optical disks or replace them, and further, from accommodated one or a plurality of optical disks, the optical disk designated by the operator can be selectively reproduced, therefore, the excellent convenience is provided to the operator.

However, in the disk reproducing apparatus, when a plurality of optical disks are accommodated in the disk reproducing apparatus, it is necessary to repeat very troublesome operations such that the operator confirms the present empty tray by a display portion, and then, designates one of the empty trays, and in the state that the tray waits the insertion, inserts the disk and accommodates the disk in the tray, and when the next disk is accommodated, the operator confirms again another empty tray by the display portion, and designates again the empty tray, and in the waiting state of insertion of optical disk, the next disk is inserted, and the desk is accommodated in the tray.

### SUMMARY OF THE INVENTION

In view of the above problems, it is an object of the present invention to provide a recording medium reproducing apparatus by which the convenience of the operator is further increased, when a plurality of recording media such as optical disks are accommodated in the reproducing apparatus.

In order to achieve the above object, according to a first aspect of the invention, there is provided a recording medium reproducing apparatus, comprising: an insertion section having an insertion opening into which a recording medium is inserted; recording medium accommodating means having a plurality of recording medium placement portions; positioning means for positioning the insertion opening to each recording medium placement portion of the accommodating means; conveyance means for conveying the recording medium inserted from the insertion opening into the recording medium accommodating means and accommodating it; and control means for controlling the positioning means and the conveyance means, wherein one recording medium from the recording media placed on the respective recording medium placement portions of the accommodating means is selected and the information recorded in the recording medium is reproduced, and wherein the recording medium reproducing apparatus characterized in that: the control means detects one recording medium placement portion from the plurality of recording medium placement portions; controls the positioning means so that the recording medium placement portion is in an insertion waiting state in which the conveyance of the recording medium from the insertion opening and its accommodation can be carried out, corresponding to the detection, and in the insertion waiting state, when the recording medium is inserted from the insertion opening, the control means controls so that the recording medium is conveyed to and accommodated in the accommodating means by the conveyance means, and further, the control means controls the positioning means so that the recording medium placement portions, other than the one recording medium placement portion, in the plurality of recording medium placement portions provided in the accommodating means, are in the insertion waiting state.

According to a second aspect of the invention, there is provided a recording medium reproducing apparatus, comprising: an insertion section having an insertion opening into which a recording medium is inserted; recording medium accommodating means having a plurality of recording medium placement portions; positioning means for positioning the insertion opening to each recording medium placement portion of the accommodating means; conveyance means for conveying the recording medium inserted from the insertion opening to the recording medium placement portion positioned by the positioning means and for accommodating it; an operation section which receives an operation command from an operator; and control means for controlling the positioning means and the conveyance means, wherein one recording medium from the recording media placed in respective recording medium placement portions of the accommodating means is selected and the information recorded in the recording medium is reproduced, and wherein when the control means receives a first command from the operation section, the control means detects one recording medium placement portion in which the recording medium is not accommodated, from the plurality of recording medium placement portions; and corresponding to the detection, the control means controls the positioning means so that the recording medium placement portion is in an insertion waiting state in which the recording medium can be conveyed from the insertion opening to and accommodated in the one recording medium placement portion, and the one recording medium placement portion and the insertion opening are positioned to each other, and when the recording medium is inserted from the insertion opening, in the insertion waiting state, the control means controls so that the recording medium is conveyed to and accommodated in the one recording medium placement portion, by the conveyance means; and further, when the other recording medium placement portion in which the recording medium is not yet accommodated, is detected in the plurality of recording medium placement portions, the control means controls the positioning means so that the other recording medium placement portion is in the insertion waiting state.

In the Drawings:
Figs. 1(a) and 1(b) are schematic structural views showing each portion of an optical disk reproducing apparatus P1 showing a preferable embodiment of the present invention.
Fig. 2 is a view showing an insertion opening.
Fig. 3 is an overall perspective view showing a concrete structure of a primary portion of the optical disk reproducing apparatus P1.
Figs. 4(a) and 4(b) are plan views in which only a disk accommodating section and a disk conveyance section are extracted.
Fig. 5 is a plan view showing a tray.
Fig. 6 is a view in which the overall disk accommodating section is shown from the y direction side surface.
Fig. 7 is a view in which the disk conveyance section is viewed from a front surface side of the apparatus P1.
Fig. 8 is a plan view in which one of driving rollers provided in the disk conveyance section is extracted and shown.
Figs. 9(a) and 9(b) are plan views showing a state in which a disk reproducing section is in a withdrawal position.
Fig. 10 is a view in which the disk reproducing section is shown from the side surface.
Fig. 11 is a plan view showing a state in which the disk reproducing section is in the reproduction position.
Fig. 12 is a view showing a movable chassis movement mechanism.
Fig. 13 is a view showing the movable chassis movement mechanism.
Fig. 14 is a view showing one of 4 wedge members rotatably attached to the vertical plate portion of the movable chassis.
Fig. 15 is a view showing a position of a tray corresponding to an operation of a slide member and the wedge member.
Fig. 16 is a view showing a position of the tray corresponding to an operation of the slide member and the wedge member.
Fig. 17 is a view showing a position of the tray corresponding to an operation of the slide member and the wedge member.
Fig. 18 is a view showing a position of the tray corresponding to an operation of the slide member and the wedge member.
Fig. 19 is a view showing a position of the tray corresponding to an operation of the slide member and the wedge member.
Fig. 20 is a view showing a position of the tray corresponding to an operation of the slide member and the wedge member.
Fig. 21 is a view showing a position of the tray corresponding to an operation of the slide member and the wedge member.
Fig. 22 is a flow chart showing control operations which are conducted by the control section when the operator conducts the second command.
Fig. 23 is a flow chart showing control operations which are conducted by the control section when the operator conducts the first command.

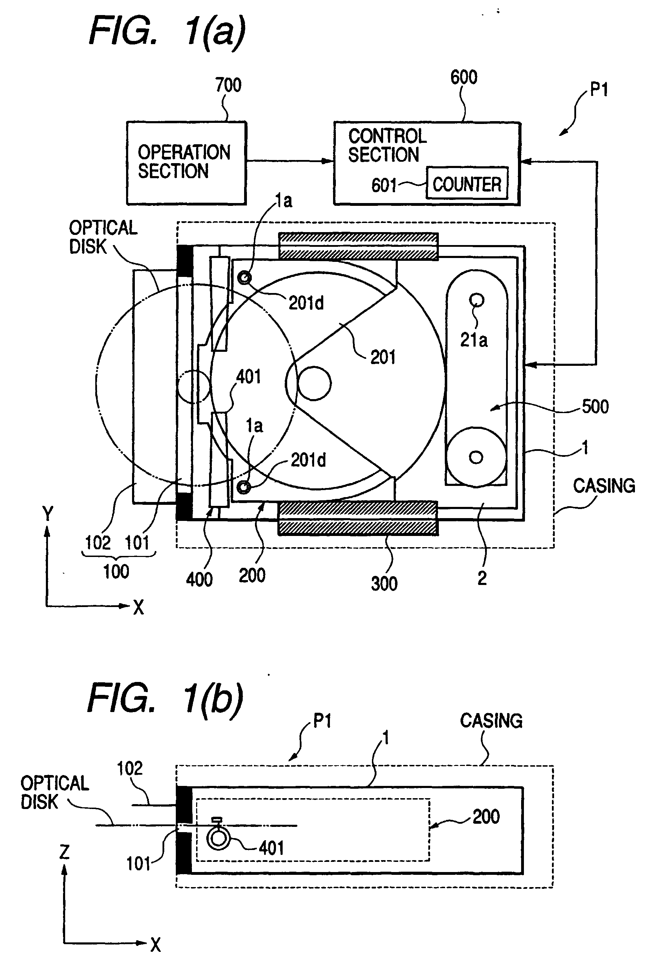

Next, referring to the drawings, a preferred embodiment of the present invention will be described. Figs. 1(a) and 1(b) are schematic structural views showing each portion of an optical disk reproducing apparatus P1 which shows the preferred embodiment of the present invention. Fig. 1(a) is a view viewed from the upper surface side of the apparatus P1, and Fig. 1(b) is a view viewed from the side surface side of the apparatus P1.

The optical disk reproducing apparatus P1 is structured by: an insertion section 100 composed of an insertion opening 101 into which the optical disk is inserted, and a door 102 as a blocking means; a disk accommodating section 200 as an accommodating means having a plurality of trays 201 in each of which the optical disk can be accommodated; a tray positioning section 300 as a positioning means for positioning the insertion opening 101 of the insertion section 100 and each tray in the height direction (z direction); a disk conveyance section 400 as a conveyance means for conveying the optical disk inserted from the insertion opening 101 in the disk insertion direction (x direction), and for accommodating the disk in the tray 201 which is positioned to the insertion position 101; a disk reproducing section 500 as a reproducing means for reproducing the optical disk; a control section 600 as a control means for controlling each of these sections; and an operation section 700 for receiving each kind of operation commands from the operator.

The insertion section 100 is provided in a front panel of a casing, not shown, of the apparatus P1, and has the insertion opening 101 and the door 102. The insertion opening 101 is provided on the front surface side of a fixed chassis 1 attached in the casing of the apparatus P1, and the operator can insert the optical disk into or draw it from the opening portion.

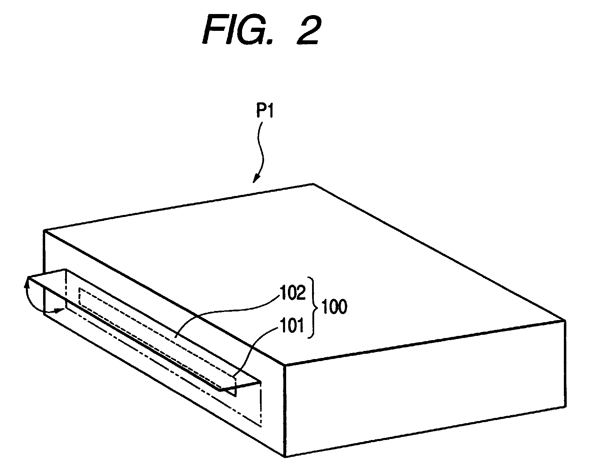

Fig. 2 is a view showing the insertion section 100. As shown in the drawing, the door 102 of the insertion section 100 is arranged in the vicinity of the insertion opening 101 (herein, on the front surface of the insertion opening 101), and by the control of the control section 600, as shown in Fig. 2, the door 102 conducts an open and close operation of the opening portion of the insertion opening 101. That is, the door 102 has a function to block the insertion of the optical disk from the insertion opening 101. In Fig. 2, the opened state of the door 102 (not blocking state of the insertion of the optical disk from the insertion opening 101) is shown by a solid line, and its closed state (blocking state of the insertion of the optical disk from the insertion opening 101) is shown by a dotted line.

Incidentally, the control section 600 controls so that the door 102 is the opened state when the apparatus P1 is in the insertion waiting state of the optical disk, which will be described later, and controls so that the door 102 is in the closed state in the other cases.

The disc accommodating section 200 is provided in the fixed chassis 1 in the back of the insertion section 100 as shown in Fig. 1(a), and a plurality of (herein, 6) trays 201 are arranged in the z direction. Further, on 2 guide shafts 1a provided on the fixed chassis 1, 2 insertion holes 201d formed on each tray 1 are respectively inserted, and the movement direction of each tray 201 is regulated in the z direction.

Further, in the back of the disk accommodating section 200, the disk reproducing section 500 to read the recording information of the optical disk is provided. The reproducing section 500, which will be described later, is composed of a turn table 501 provided on the lower surface side of the optical disk, a damper 502, provided on the upper surface side of the optical disk, to clamp the optical disk together with the turn table 501, a pick-up 503, and a pick-up movement mechanism 504 to move the pick-up 503 in the radius direction of the disk.

As shown in Fig. 1(a), the disk reproducing section 500 is supported on a movable chassis 2, the movable chassis 2 is engaged with the fixed chassis 1, and can move in the z direction shown in Fig. 1(b) by a movable chassis movement mechanism (which will be described later). Thereby, the disk reproducing section 500 can move in the z direction.

Further, the disk reproducing section 500 can rotate around a support shaft 21a vertically provided on the movable chassis 2, and can move between a reproduction position and a withdrawal position, which will be described later, by a disk reproducing section movement mechanism, which will be described later.

Further, the tray positioning section 300 which is engaged with the movable chassis 2 and the fixed chassis 1, is provided on both sides of the movable chassis 2. The tray positioning section 300 has the movable chassis movement mechanism and a tray movement mechanism, and the tray positioning section 300 conducts positioning such that each tray 201 of the disk accommodating section 200 is alternatively positioned to the height position of the insertion opening 101, corresponding to the operation by which the movable chassis movement mechanism moves the movable chassis 2 in the z direction, by the control operation of the control section 600, and together with that, the tray 201 which is adjacent to the positioned tray 201, is separated in the arrangement direction (z direction) by the tray movement mechanism, which will be described later, and a securing operation to secure a space in which the disk reproducing section 500 can move to the reproduction position, is conducted.

The disk conveyance section 400 is provided on the fixed chassis 1 between the insertion section 100 and the disk accommodating section 200, and has a pair of driving rollers 401. The optical disk inserted from the insertion opening 101 by the operator, is conveyed by the driving rollers 401 to the disk accommodating section 200, and is accommodated in the tray 201 which is positioned to the insertion opening 101. Further, the optical disk already accommodated in the disk accommodating section 200 is conveyed from the tray 201 which is positioned by the tray positioning section 300, to the insertion opening 101 by the driving rollers 401, and is ejected outside the apparatus.

The operation section 700 receives the operation command from the operator which is conducted by using each kind of buttons provided on the operation panel of the front surface of the casing, not shown, of the apparatus P1, and commands it to the control section 600.

The control section 600 controls each section of the apparatus according to the command from the operation section 700. Further, the control section 600 has a counter 601 as a timer means, and times the operation timing of each section at the control operations of the control section 600.

The optical disk reproducing apparatus P1 is structured in outline as described above, and the operation section 700 receives each kind of operation commands from the operator, and commanding it to the control section 600, the control section 600 controls and operates each section corresponding to the content of the command.

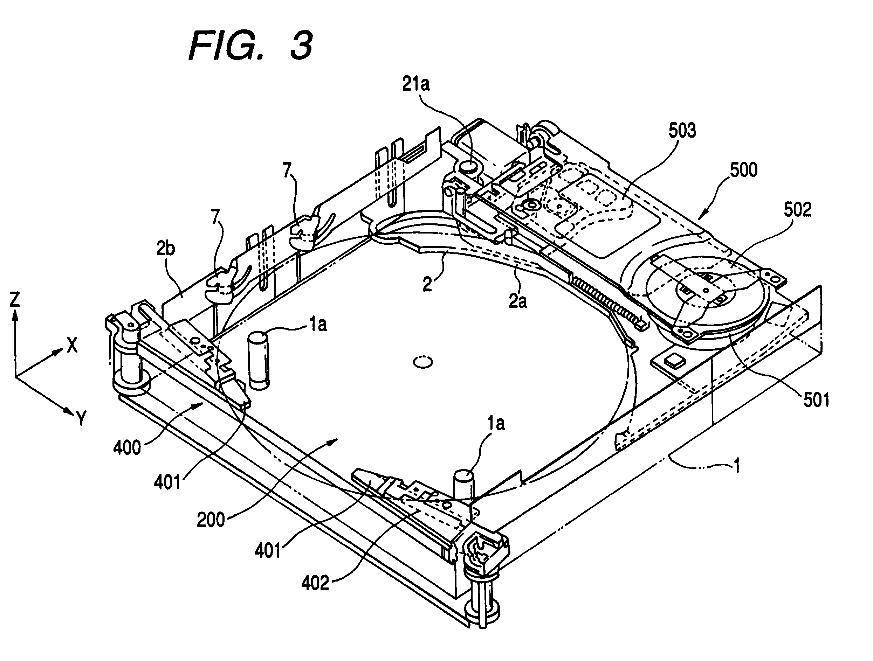

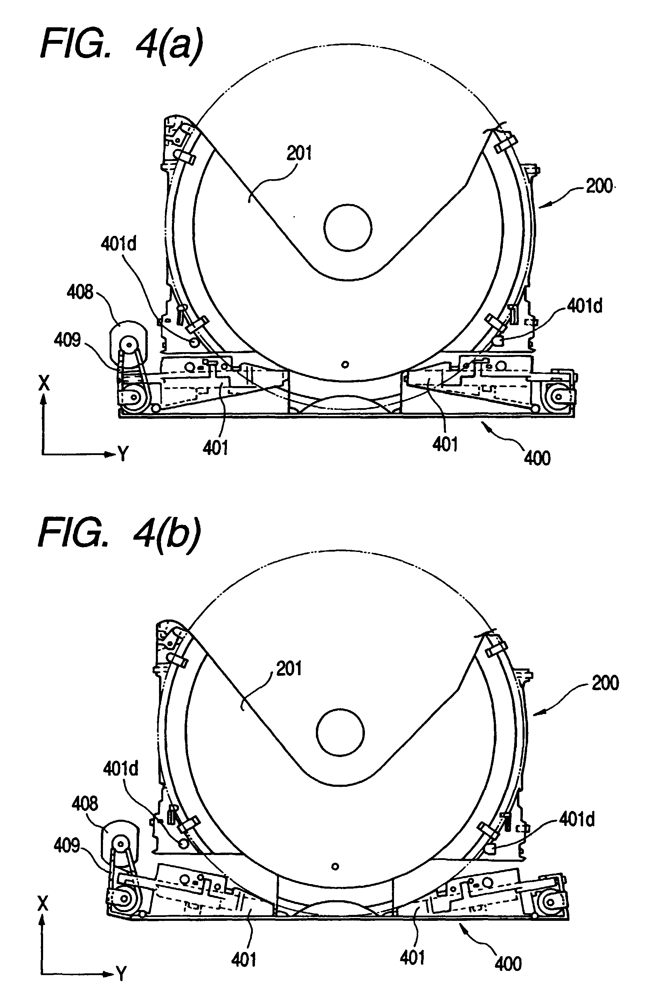

Next, the detailed structure of each section of the optical disk reproducing apparatus will be described. Fig. 3 is an overall perspective view (the disk accommodating section 200 and the control section 600 are omitted) showing an concrete structure of a primary portion of the optical disk reproducing apparatus P1, and Figs. 4(a) and 4(b) are plan views of only the disk accommodating section 200 and the disk conveyance section 400 which are extracted.

As shown in Fig. 3, the movable chassis 2 is composed of a flat plate portion 2a supporting the disk reproducing section 500, and a pair of vertical plate portions 2b which are provided right and left the flat plate portion 2a. Respective 2 wedge members 7 are rotatably provided on the inside surface of the vertical plate portion 2b, and total 4 wedge members 7 (a part of which is not shown) are rotatably provided on the inside surface of the vertical plate portions 2b, and the 4 wedge members 7 is synchronously rotated by a driving mechanism, not shown. A tray movement mechanism is structured by these 4 wedge members and the driving mechanism.

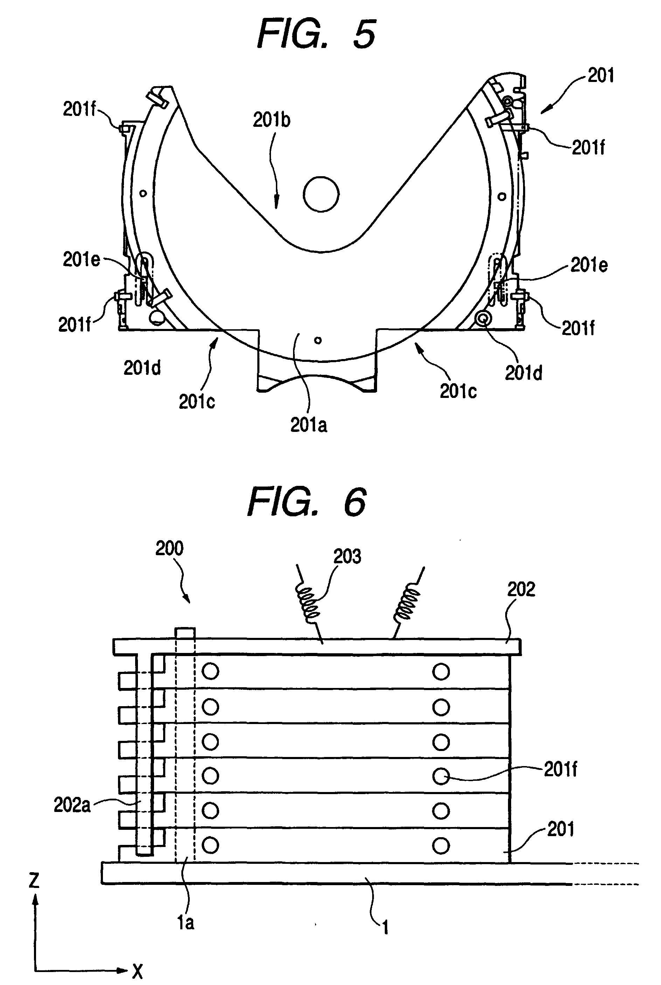

Fig. 5 is a plan view showing the tray 201. As shown in the drawing, the overall tray 201 is approximately V-shaped, and cut-out portions 201b and 201c are formed on a disk carrying surface 201a. The cut-out portion 201b ranges to the area including the center of the optical disk carrying on the disk carrying surface 201a, and allows the invasion of the turntable 501, clamper 502, and pick-up 503 of the disk reproducing section 500 into this area. According to this, the optical disk can be reproduced at a position somewhat separated from the disk carrying surface 201a.

The cut-out portion 201c is formed into a pair, and into this area, the invasion of the driving rollers 401 is allowed. As detailed later, the driving rollers 401 invaded into the cut-out portion 201c interfere with the area occupied by the optical disk carried on the disk carrying surface 201a.

An insertion hole 201d is a hole into which the guide shaft 1a is inserted, and a disk pressing member 201e is elastic, and presses an edge of the optical disk carried on the disk carrying surface 201a, and prevent the optical disk from being shaken.

Respective two protrusions 201f protrude from right and left side surfaces of the tray 201, and total 4 protrusions are provided, which will be detailed later, and the drive of four wedge members 7 constituting the tray movement mechanism is transmitted to these 4 protrusions 201f, and the tray 201 is moved in the z direction. Incidentally, herein, the structures of 6 trays are assumed to be all the same.

Fig. 6 is a view showing the whole body of the disk accommodating section 200 viewed from the side surface in the y direction. As shown in this drawing, 6 trays 201 are arranged in the z direction such that the guide shaft 1a is inserted into the hole 201d. Further, in the upper portion of the tray 201, a regulation plate 202 is provided, and positioned so as to be arranged together with 6 trays. In the regulation plate 202, a hole into which the guide shaft 1a is inserted, is formed, and the regulation plate 202 is interconnected to the fixed chassis 1 through a coil spring 203 located between them. According to this, the regulation plate 202 regulates so that the tray 201 does not move over toward the upper side in the z direction. Further, on the regulation plate 202, a hanging portion 202a contacting with the side surface of the tray 201 is formed, and presses the tray 201 so that the tray 201 is not shaken in the y direction.

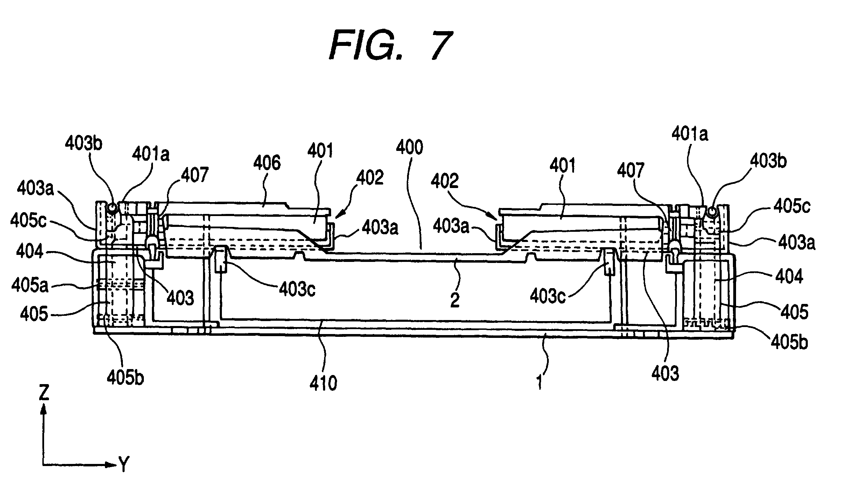

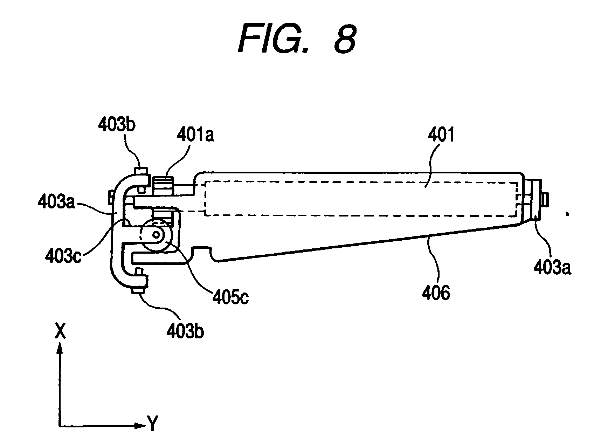

Fig. 7 and Fig. 8 are views showing details of the disk conveyance section 400, and Fig. 7 is a view of the disk conveyance section 400 viewed from the front surface side of the apparatus P1, and Fig. 8 is a plan view of one of the driving rollers 401, which is shown by being extracted, and is provided in the disk conveyance section 400.

A gear portion 401a is integrally formed with the driving roller 401, and the roller and the gear portion 401a are in the coaxial state. A support chassis 403 is arranged in the lower portion of the driving roller 401, and rotatably supports the driving roller 401 by a pair of vertical plate portions 403a. A disk path regulation member 406 is arranged in the upper portion of the driving roller 401, and is rotatably supported around a fulcrum 403b with respect to the vertical plate portion 403a of the support chassis 403. A space between the disk path regulation member 406 and the driving roller 401 is a disk conveyance path 402. A coil spring 407 is provided between the disk path regulation member 406 and the support chassis 403, and the disk path regulation member 406 is forced toward the direction coming near the driving roller 401.

A pair of rotary members 405, which are rotatable around a shaft 404 which is along the z direction, are provided on both sides in the y direction on the fixed chassis 1, and both ends of the rotary member are rotatably supported by the fixed chassis 1 and a protruded piece 403c of the support chassis 403. The rotary member 405 is inserted through a hole (not shown) formed on the support chassis 403. A gear portion 405c is formed on the upper end side of the rotary member 405, and is engaged with the gear portion 401a on the same axis as the driving roller 401.

Further, a driving transmission pulley 405a is provided on an intermediate portion of one of rotary members 405, and the driving force of a motor 408 (shown in Figs. 4(a) and 4(b)) is transmitted by a belt 409 (shown in Figs. 4(a) and 4(b)), and a synchronous pulley is provided on the lower end portion 405b of each rotary member 405, and the pair of rotary members 405 are synchronously rotated by the belt 409. According to the above structure, the driving force of one motor is transmitted to two driving rollers 401.

Further, the protruded piece 403c which protrudes downward, is provided on the support chassis 403, and passes through a hole (not shown) formed on the movable chassis 2. Further, on the fixed chassis 1, a movable member 410 is provided in the x direction in Fig. 7, and is engaged with the protruded piece 403c.

According to this structure, when the movable member 410 is moved in the x direction, the support chassis 403 is rotated around the shaft 404 of the rotary member 405, and the driving roller 401 is rotated around the shaft 404.

At this time, because the gear portion 401a of the driving roller 401 is vertically engaged with a gear portion 405c of the rotary member 405, the engagement is not disengaged. According to this structure, the driving roller 401 can be rotated around the shaft 404 located at the end portion of the insertion opening 101.

According to the above-described mechanism of the disk conveyance section 400, the pair of driving rollers 401 can move between the disk conveyance position to convey the optical disk and the withdrawal position to be positioned when the optical disk is not conveyed. Fig. 4(a) shows the state that driving roller 401 is positioned at the disk conveyance position, and Fig. 4(b) shows the state that the driving roller 401 is positioned at the withdrawal position.

When the driving roller 401 is at the conveyance position, as shown in Fig. 4(a), the driving roller 401 invades the cutout portion 201c. At this time, because the driving roller faces toward the y direction and is in parallel to the insertion opening 101, the driving force of the driving roller 401 is directed to the conveyance direction (the x direction) of the optical disk. Further, in this case, the driving roller 401 is within the area occupied by the optical disk which is carried on the disk carrying surface 201a of the tray 201, and in the z direction, the driving roller 401 is positioned so as to interfere this optical disk.

When the driving roller 401 is at the withdrawal position, as shown in Fig. 4(b), the driving roller 401 is positioned at a position apart from the cutout portion 201c of the tray 201. At this time, the driving roller 401 is in nonparallel with the insertion opening 101, and positioned out of the area occupied by the optical disk which is carried on the disk carrying surface 201a of the tray 201. The reproduction of the optical disk is carried out in this state, and the driving roller 401 does not interfere the reproduction operation of the optical disk.

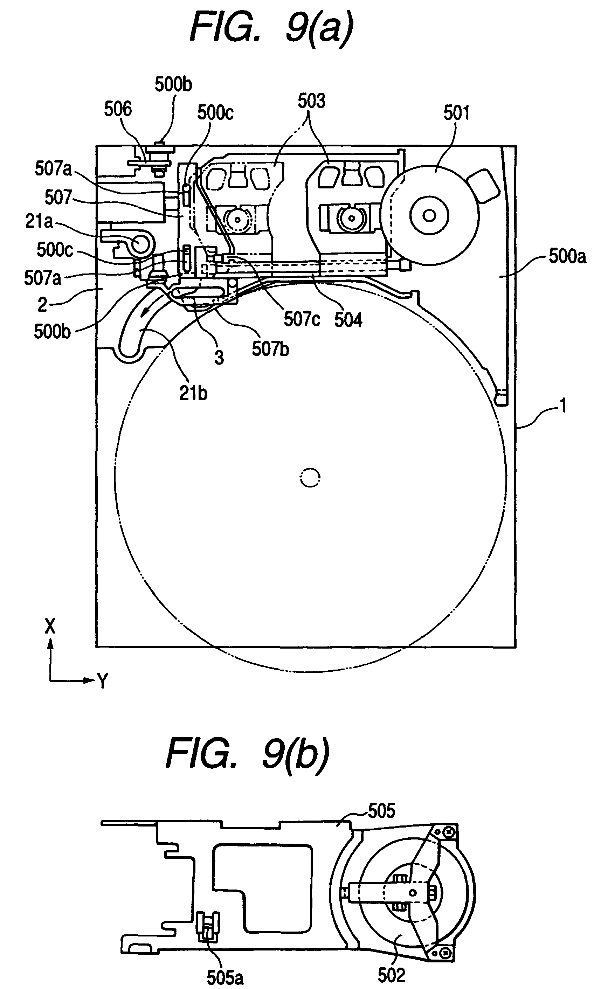

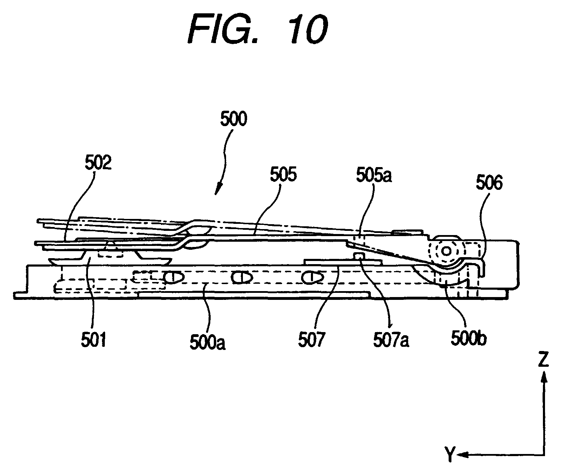

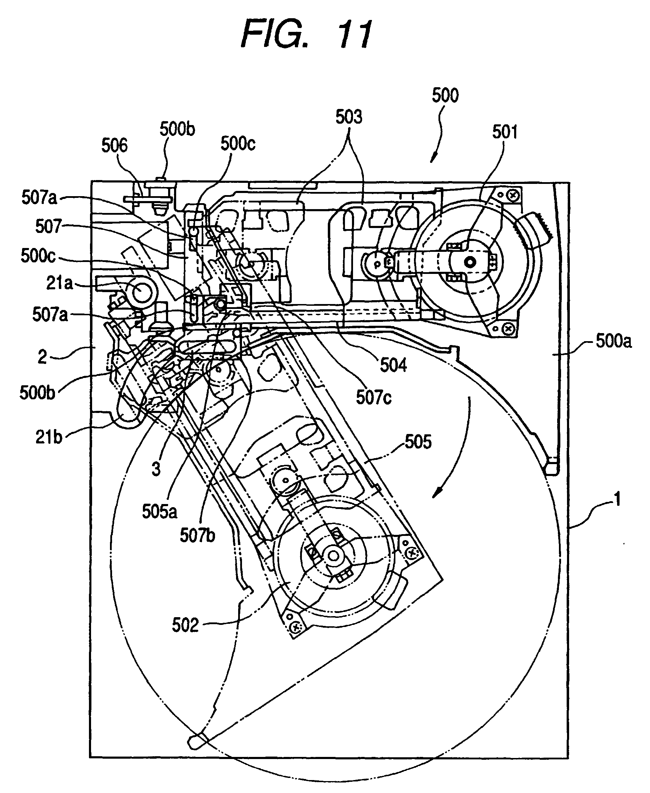

Fig. 9(a) to Fig. 11 are views showing the detail of the disk reproducing section 500 and the disk reproducing section movement mechanism, and Fig. 9(a) is a plan view showing the state that the disk reproducing section 500 is at the withdrawal position. Incidentally, Fig. 9(a) is shown in the state that a clamper base 505 by which the disk reproducing section 500 holds the damper 502, is removed, and the damper base 505 is shown in Fig. 9(b). Further, Fig. 10 is a view showing the disk reproducing section 500 from the side surface, and Fig. 11 is a plan view showing the state that the disk reproducing section 500 is at the reproduction position.

The turn table 501, pick-up 503, and pick-up movement mechanism 504 are provided on a base 500a of the disk reproducing section 500. The base 500a is rotatably held around the support shaft 21a on the movable chassis 2. The clamper base 505 is rotatably attached to the base 500a, around the support shaft 500b, and on the leading edge side, holds the damper 502. Further, a reduction portion 505a which protrudes toward the rear side of the drawing in Fig. 9(b), is formed. A coil spring 506 is provided on the support shaft 500b, and by this urging force, the damper base 505 is urged in the direction coming near the base 500a.

Further, a clamping operation member 507 is provided on the base 500a. A long hole 507a and a long hole 507b which are perpendicular to each other, and a roller 507c are formed on the clamping operation member 507. A protruded pin 500c protruded on the base 500a is engaged with the long hole 507a, thereby, the clamping operation member 507 can move toward the base 500a in the shaft direction of a support shaft 500b.

A circular arc groove 21b is formed on the movable chassis 2, and a movable pin 3 is engaged with the circular arc groove 21b. The movable pin 3 is also engaged with a long hole 507b of the clamping operation member 507. The movable pin 3 is driven in the circular arc groove 21b by a driving mechanism, not shown.

When the movable pin 3 is driven in the circular arc groove 21b, the movement of the disk reproducing section 500 between the reproduction position and the withdrawal position, and the disk clamping operation are conducted. Initially, in Fig. 9(a), the disk reproducing section 500 is positioned at the withdrawal position, and at this time, the reduction portion 505a of the damper base 505 runs on the roller 507c of the clamping operation member 507, and the damper 502 is in the separated state from the turn table 501, that is, in the clamp release state.

When the movable pin 3 is driven along the circular arc groove 21b in the arrowed direction by the driving mechanism, not shown, because the movement of the clamping operation member 507 is restricted in the long axis direction of the long hole 507a, the clamping operation member 507 is not displaced to the base 500a, and the clamping operation member 507 and the base 500a is integrally rotated around the support shaft 21a. According to this, the disk reproducing section 500 is moved toward the reproduction position shown by the dotted line in Fig. 11.

Slight time before the movable pin 3 reaches the end portion of the circular arc groove 21b, that is, slight time before the disk reproducing section 500 reaches the reproduction position, the driving direction of the movable pin 3 is in parallel with the long axis direction of the long hole 507a of the clamping operation member 507. According to this, because the clamping operation member 507 is displaced in the long axis direction of the long hole 507a to the base 500a, the reduction portion 505a of the damper base 505 is out of the aground portion on the roller 507c. As the result, the damper 502 is pressed onto the turn table 501 by the urging force of the coil spring 506, and the clamping operation is conducted.

As described above, the clamping operation of the disk is conducted being interlocked with the movement of the disk reproducing section 500 from the withdrawal position to the reproduction position, and simultaneously when the disk reproducing section 500 is positioned at the reproduction position, the clamping operation is conducted. When the reproduction of the disk is completed and the disk reproducing section 500 is moved from the reproduction position to the withdrawal position, the clamping of the disk is also released.

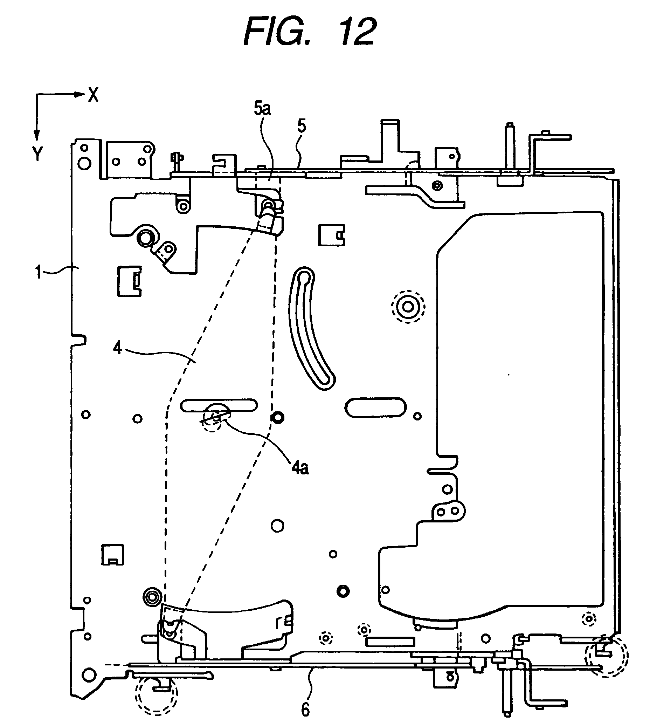

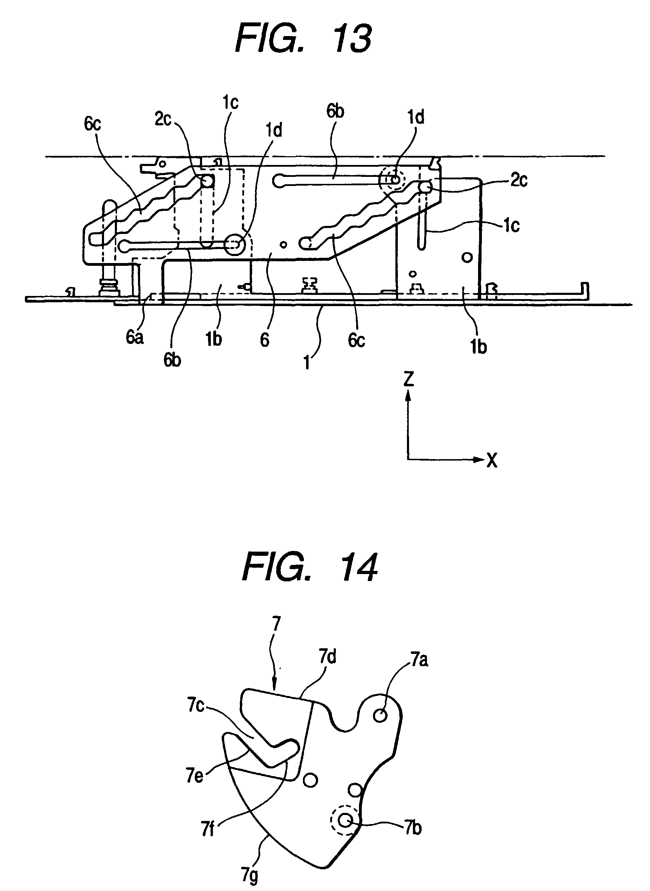

Fig. 12 and Fig. 13 are views showing the movable chassis movement mechanism, and Fig. 12 is a view viewed from the plain surface of the fixed chassis 1. A rotary arm 4 is attached on the rear surface of the bottom portion of the fixed chassis 1 so as to be rotatable around the fulcrum 4. The rotary arm 4 is rotated by the driving force of the motor, not shown. As shown in Fig. 13, a pair of 2 riser plates 1b (total 4 riser plates) along the z direction are provided on both the left and right ends of the fixed chassis 1, and slide members 5 and 6 are movably attached in the x direction along the riser plates 1b.

The slide members 5 and 6 have protruded pieces 5a and 6b which are protruded in the y direction from the respective lower end portions, and the protruded pieces 5a and 6a are respectively connected to both end portions of the rotary arm 4 so that these can be pivotally moved. According to this, when the rotary arm 4 is rotated by the driving force of a motor, not shown, the slide members 5 and 6 are respectively moved in the opposite directions along the x direction.

Fig. 13 is a side view showing the slide member 6 attached to the riser plate 1b of the fixed chassis 1. Two linear holes 6b are formed along the x direction on the slide member 6, and a pin 1d formed on each riser plate 1b of the fixed chassis 1 is engaged with the hole 6b. According to this, the movement direction of the slide member 6 is regulated to the x direction.

A guide hole 1c along the z direction is formed on each riser plate 1b, and pins 2c formed on a pair of vertical plate portions 2b of the movable chassis 2 (2 pins for each vertical plate portion 2b, total 4 pins are formed) are engaged in the guide holes 1c. According to this, the movement direction of the movable chassis 2 is regulated in the z direction.

Further, the pins 2c are respectively engaged in 2 step-like inclined holes 6c formed on the slid member 6. When the slide member 6 is moved in the x direction, the pin 2c is driven in the z direction corresponding to that. Because two inclined holes, not shown, inclined in the opposite direction to the inclined hole 6c are formed on the slid member 6, four pins 2c are driven in the same direction, and the movable chassis 2 is moved (up and down) along the z direction.

The inclined holes 6c are the step-shape of 6 steps, and this is the structure for positioning the movable chassis 2 corresponding to each height position of 6 trays.

Fig. 14 is a view showing one of 4 wedge members rotatably attached on the vertical plate portions 2b of the movable chassis 2. Reference numeral 7a is a rotary fulcrum 7a attached onto the vertical plate portion 2b. Reference numeral 7b is a protrusion 7b engaged in a circular arc groove 21c formed on the vertical plate portion 2b, and the range of the rotation of the wedge member 7 is regulated by the circular arc groove 21c. Reference numeral 7c is an approximately L-shaped groove hole 7c into which a protrusion 201f of the tray 201 enters. Reference numerals 7d, 7e, 7f, and 7g are cam surfaces which come into contact with the protrusion 201f of the tray 201. Incidentally, as described above, four wedge members 7 are synchronously rotated by the interlock mechanism, not shown.

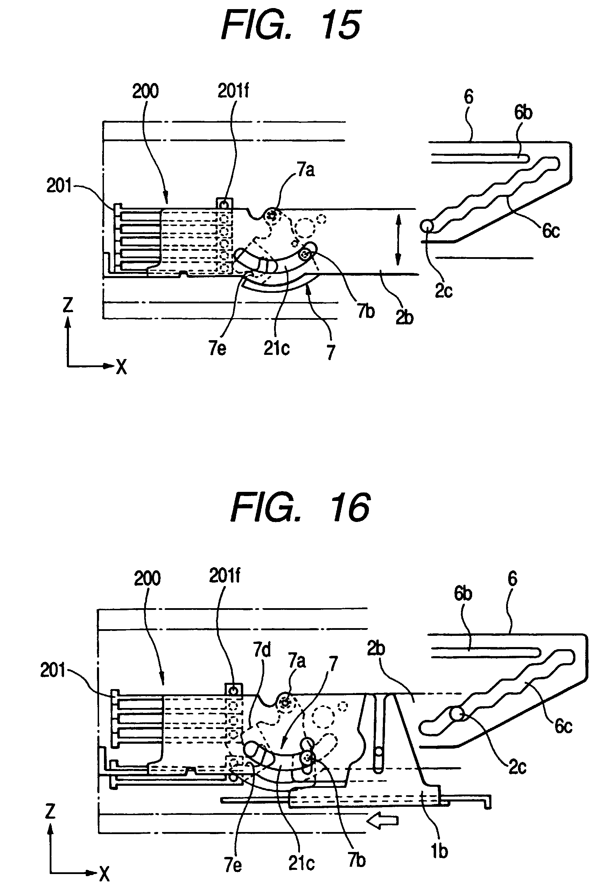

Next, the operation of each of these portions will be described by Fig. 15 to Fig. 21. Fig. 15 to Fig. 21 are views showing the position of the tray 201 corresponding to the movement of the slide member 6 (slide member 5) and the wedge member 7.

Further, Fig. 15 to Fig. 19 show the operations by which the optical disk inserted from the insertion opening 101 is carried on the tray 201 of the disk accommodating section 200. Hereinafter, a case where the optical disk inserted from the insertion opening 101 is accommodated in the second tray 201 from the lowermost one, will be described as an example.

Fig. 15 shows the waiting state for the operation. At this time, 6 trays 201 are in the superimposed state. The pin 2c is positioned at the lowermost step of the inclined hole 6c, and the movable chassis 2 is positioned at the lowermost portion. The wedge member 7 is withdrawn to the position separated from the tray 201, and at the time of the up and down operations of the movable chassis 2, the wedge member 7 does not collide with the tray 201.

As shown in Fig. 14, the slide member 6 (slide member 5) is driven and the movable chassis 2 is moved up. At the position at which the pin 2c is positioned at the second step from the lowermost step, the movable chassis 2 is stopped. At this height, the wedge member 7 can hold the second tray from the lower side. As described above, because the steps of 6 steps of the inclined hole 6c correspond to the height position of each tray in the waiting state shown in Fig. 15, for example, when the fourth tray from the lower side is made to be held by the wedge member 7, it is necessary to position the movable chassis 2 to the fourth step from the lowermost step of the inclined hole 6c.

Next, as shown in Fig. 14, the operation to hold the second tray from the lower side by the wedge member 7 is conducted. When the wedge member 7 is rotated clockwise in the drawing, the cam surface 7d pushes up the protrusion 201f of the third tray from the lower side and moves upward 4 trays of the third to sixths trays from the lower side. Simultaneously, the protrusion 201f of the second tray 201 from the lower side runs on the cum surface 7e and enters into the groove hole 7c, and the second tray 201 from the lower side is held by the wedge member 7.

Next, the slide member 6 (slide member 5) is moved and the movable chassis 2 is moved upward. Thereby, each tray of the third to sixth trays from the lower side is pressed by the cam surface 7d and moved up, and the second tray 201 from the lower side is also pushed up by the cam surface 7e and moved up. As the result, only the lowermost tray 201 is left at the waiting position.

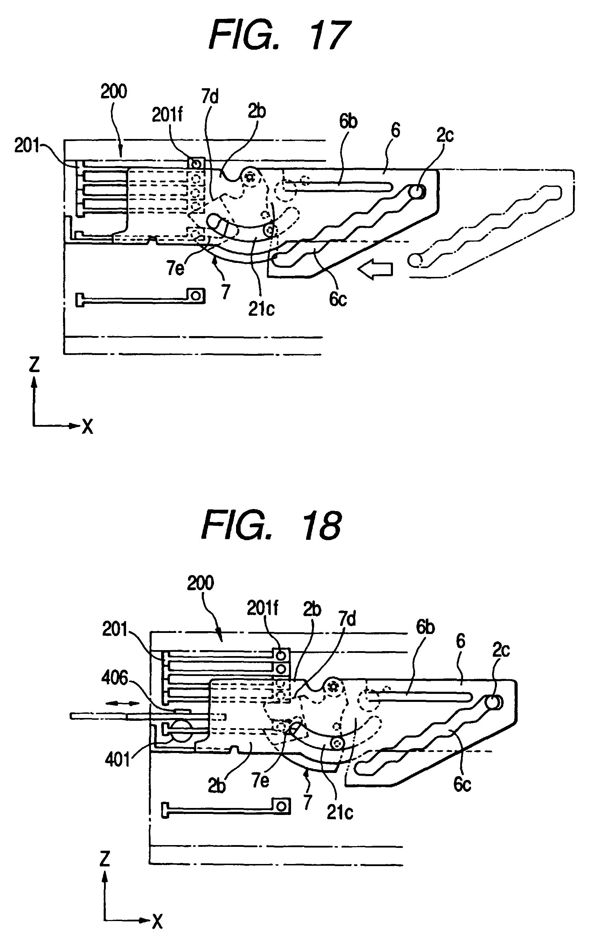

The movement of the movable chassis 2 is stopped at the state that the pin 2c shown in Fig. 17 is positioned at the uppermost step of the inclined hole 6c, and the second tray 201 from the lower side is held by the wedge member 7, and positioned at the position corresponding to the uppermost height of the movable chassis 2.

Incidentally, because the uppermost chassis 2 is formed previously corresponding to the height position of the insertion opening 101, thereby, the second tray 201 from the lower side is positioned to the insertion opening 101. Further, this height also corresponds to that of the driving roller 401 at the disk conveyance position of the disk conveyance section 400, and the conveyance and ejection of the optical disk is conducted at this height.

Next, as shown in Fig. 18, the wedge member 7 is rotated clockwise slightly. The position of the second tray 201 from the lower side which is held by the wedge member 7, is not changed, but each tray of the third to sixth trays from the lower side is pressed by the cam surface 7d, and moved up slightly. Thereby, a space into which the driving roller 401 invades is secured between trays 201. After that, the driving roller 401 is moved from the withdrawal position (shown in Fig. 4(b)) to the disk conveyance position (shown in Fig. 4(a)), and it comes to the situation that the disk conveyance can be conducted from the insertion opening 101.

After that, the optical disk inserted from the insertion opening 101 is conveyed inside by the rotation driving of the driving roller 401. When the optical disk is conveyed to the just above of the second tray 201 from the lower side, which is positioned, the drive of the driving roller 401 is stopped.

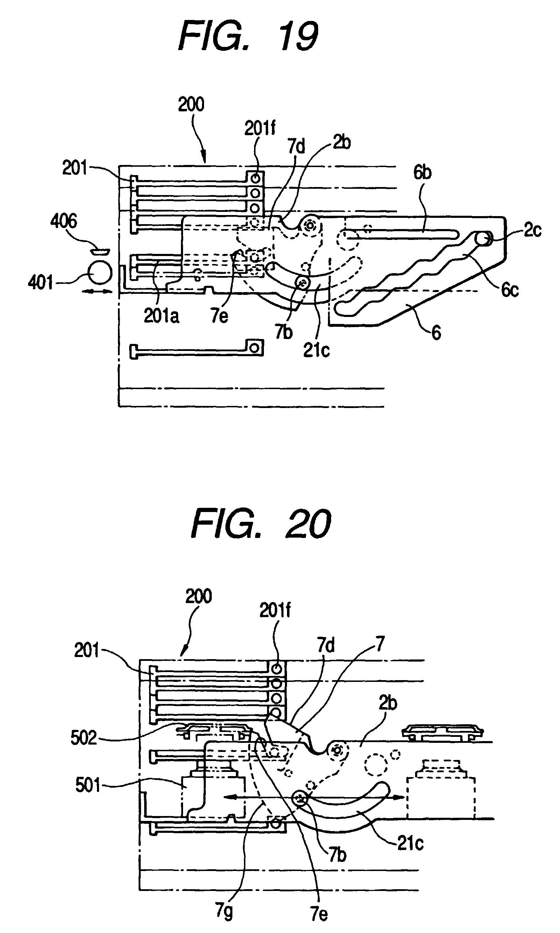

Next, as shown in Fig. 19, the driving roller 401 is moved from the disk conveyance position to the withdrawal position, and the contact of the driving roller 401 with the optical disk is released. At this time, because the driving roller 401 is moved to the withdrawal position while being rotated in the disk insertion direction, the optical disk is not displaced to the withdrawal position side accompanying the movement of the driving roller 401.

When the driving roller 401 reaches the withdrawal position, the optical disk is dropped on the disk carrying surface 201a, and carried by the disk carrying surface 201a. After that, the slide member 6 (slide member 5) is driven and the movable chassis 2 is lowered, and the movable chassis 2 is stopped at the position at which the movable chassis 2 is positioned to the second step from the lowermost step of the inclined hole 6c by the pin 2c. Thereby, the movable chassis 2 is positioned at the height position shown in Fig. 16. Further, the wedge 7 is rotated in the counterclockwise direction in the drawing, and the contact of the protrusion 201f of the tray 201 with the cam surfaces 7d and 7e is released.

After that, the slide member 6 (slide member 5) is driven and the movable chassis 2 is lowered, and the movable chassis 2 is stopped at the position at which the pin 2c is positioned at the lowermost step of the inclined hole 6c. Thereby, the movable chassis 2 is positioned at the height position shown in Fig. 15. according to the above operations, a series of operations by which the optical disk inserted from the insertion opening 101 is conveyed by the driving roller 401 of the disk conveyance section 400 and accommodated in the tray 201 of the disk accommodating section 200, are completed.

Incidentally, the operation by which the optical disk carried on the tray 201 is ejected from the insertion opening 101, is conducted by reversing the same process as the operation by which the optical disk is conveyed in, except that the driving roller 401 is rotated in the disk ejecting direction.

Next, operations by which the optical disk carried on the tray 201 of the disk accommodating section 200 is reproduced, will be described by Fig. 15 and Fig. 16, and Fig. 20 and Fig. 21. The following description will be given as an example in the case where the optical disk carried on the second tray from the lowermost one is selected and reproduced.

In the waiting state as shown in Fig. 15, when a command to reproduce the optical disk carried on the second tray from the lower side, is received from the control section 600, the movable chassis 2 is moved in order that the wedge member 7 and the disk reproducing section 500 may be positioned at the height corresponding to the second tray from the lower side.

That is, the slide member 6 (slide member 5) is driven and to the position at which the pin 2c is positioned at the second step from the lowermost step, the movable chassis 2 is moved up. According to this, because the movable chassis 2 is positioned at the height shown in Fig. 16, the optical disk carried on the second tray 201 from the lower side is in the state that it can be reproduced.

After that, in order to secure the space for the disk reproducing section 500 to invade between trays 201, as shown in Fig. 16, the wedge member 7 is rotated in the clockwise direction in the drawing. The cam surface 7d of the wedge member 7 comes into contact with the protrusion 201f of the third tray from the lower side, and pushes up it and four trays of the third to the sixth trays are moved upward. At the same time, the protrusion 201f of the second tray 201 from the lower side runs on the cam surface 7e, and enters into the groove hole 7c. The protrusion 201f of the tray 201 at the lowermost comes into contact with the cam surface 7e. After that, the wedge member 7 is further rotated in the clockwise direction in the drawing.

According to this, four trays of the third to the sixth trays from the lower side are further moved upward from the position in Fig. 16. Simultaneously, the protrusion 201f of the second tray 201 from the lower side is lifted by the cam surface 7f.

Further, the protrusion 201f of the tray 201 at the lowermost position is not moved at the position being pressed by the cam surface 7e. According to this, a space into which the disk reproducing section 500 can invade is formed around the second tray 201 from the lower side. This state is shown in Fig. 20. This space is more widely formed than the space into which or from which the optical disk is conveyed and ejected. The protrusion 201f of the second tray 201 from the lower side enters deeply in the groove hole 7c, and the tray 201 is held by the wedge member 7.

After that, as shown in Fig. 20, the disk reproducing section movement mechanism is driven, and the disk reproducing section 500 which is withdrawn at the withdrawal position (shown in Fig. 9(a)), is moved to the reproduction position (also shown in Fig. 11), and the disk reproducing section 500 is positioned in the space. As shown in the drawing, because the damper 502 of the disk reproducing section 500 and the turn table 501 invade into the space in the clamp released state (the state in which the damper 502 is separated from the turn table 501), the space has the dimensions corresponding to that.

When the disk reproducing section 500 reaches the reproduction position in the space, the damper 502 is lowered being interlocked with the movement of the disk reproducing section movement mechanism, and the clamp of the optical disk is conducted. Simultaneously with this operation, the wedge member 7 is slightly rotated counterclockwise, and the second tray 201 from the lower side is lowered. According to this, the optical disk carried on the second tray 201 from the lower side is carried on the turn table 201, and the tray 201 and the optical disk are separated from each other.

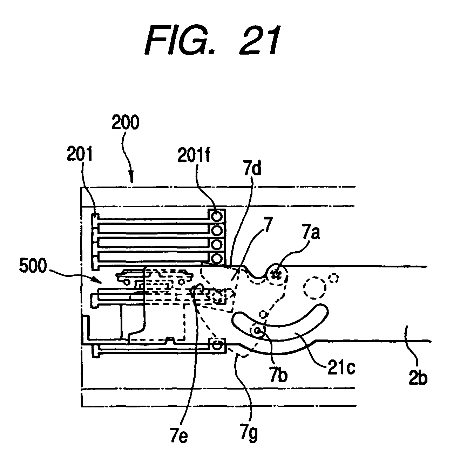

When this operation and the lowering movement of the clamper 502 are conducted almost simultaneously, the clamp of the optical disk is conducted. This state is shown in Fig. 21. In the state in the drawing, the reproduction of the optical disk is conducted.

By the counterclockwise rotation of the wedge member 7, four trays of the third to sixth trays are moved downward from the state in Fig. 20. According to this, the space occupied by 6 trays 201 in the z direction, is reduced from the space, shown in Fig. 20, in the case where the disk reproducing section 500 invades.

According to this operation, because a space necessary for floating supporting of the optical disk at the reproduction can be secured, thereby, the thickness of the apparatus can be reduced by this reduction amount.

Next, operations of each section of the optical disk reproducing apparatus P1 when the operator conducts the operation command from the operation section 700, will be described.

In the optical disk reproducing apparatus P1, when the optical disk accommodated in one tray 201 of the disk accommodating section 200 is reproduced in the normal reproduction mode of the apparatus, for example, the operator conducts the operation command (disk reproduction command) to reproduce the tray 201 in which the reproduction-desired optical disk is accommodated, by the operation section 700 of the operation panel, not shown.

According to this, the control section 600 selects the tray 201 from the trays of the disk accommodating section 200, and positions the tray 201 to the height position of the insertion opening 101 by the tray positioning section 300.

Further, by the tray positioning section 300, another tray 201 adjacent to the positioned tray 201 is separated from the positioned tray 201 in the arrangement direction and a space is secured, and after that, the movable chassis 2 is moved in the z direction by the movable chassis movement mechanism, and is made to enter into the space.

Further, by rotating the disk reproducing section 500 around the support shaft 21a, the disk reproducing section 500 is moved from the withdrawal position to the reproduction position, and after that, the optical disk is rotated under the state that the optical disk which is placed on the tray 201 and accommodated in it, is held by the damper provided in the disk reproducing section 500 and separated from the tray 201, and by reading the recording information by the pick-up, the optical disk desired by the operator is reproduced.

Further, when the operator desires that a new optical disk is accommodated in the desired tray 201 of the disk accommodating section 200, for example, the operator conducts a designation tray selection command to make the accommodation-desired tray 201 the insertion waiting state, from the operation section 700 of the operation panel, not shown, and according to the command, the control section 600 selects the tray 201 in the trays of the disk accommodating section 200.

Next, the movable chassis movement mechanism is moved by the control operation of the control section 600, and when the disk reproducing section 500 moves the movable chassis 2 which is previously at the withdrawal position, in the z direction, the tray positioning section 300 is operated, and the tray 201 is positioned to the insertion opening 101. After that, by controlling so that the door 102 is opened, the apparatus P1 is made to be the optical disk insertion waiting state (that is, the insertion waiting state of the recording medium).

According to this, the operator can confirm from the state in which the door 102 is opened, that the disk can be inserted, and a new optical disk can be inserted from the insertion opening 101.

Incidentally, because the control section 600 can detect previously whether the optical disk is accommodated in each tray 201, when the optical disk is accommodated in the tray 201, the control section 600 controls the disk conveyance section 400 following to the above control operation, thereby, the control section 600 makes the optical disk accommodated in the positioned tray 201, a state that the optical disk is ejected from the insertion opening to the outside of the apparatus (that is, a portion of the optical disk is exposed from the insertion opening 101 to the outside). Thereby, after the operator draws out the ejected optical disk from the insertion opening, the operator can again insert the optical disk from the insertion opening 101 which is in a state that the door 102 is opened.

When the optical disk is inserted from the insertion opening 101 in this manner, the control section 600 controls the disk conveyance section 400, and thereby, after the optical disk is drawn in the fixed chassis 1, successively, the optical disk is conveyed to the disk accommodating section 200 and accommodated in the positioned tray 201.

The tray 201 in which the optical disk is accommodated in this manner, is accommodated and stored at the predetermined respective store positions in the z direction of the disk accommodating section 200 together with other trays 201.

Incidentally, when the operator desires to further accommodate a new optical disk in the other tray 201, the operator commands the designation tray selection command successively to the above operations, and according to the command, the control section 600 repeats the above control operations, thereby, the new optical disk is accommodated and stored in the other tray 201.

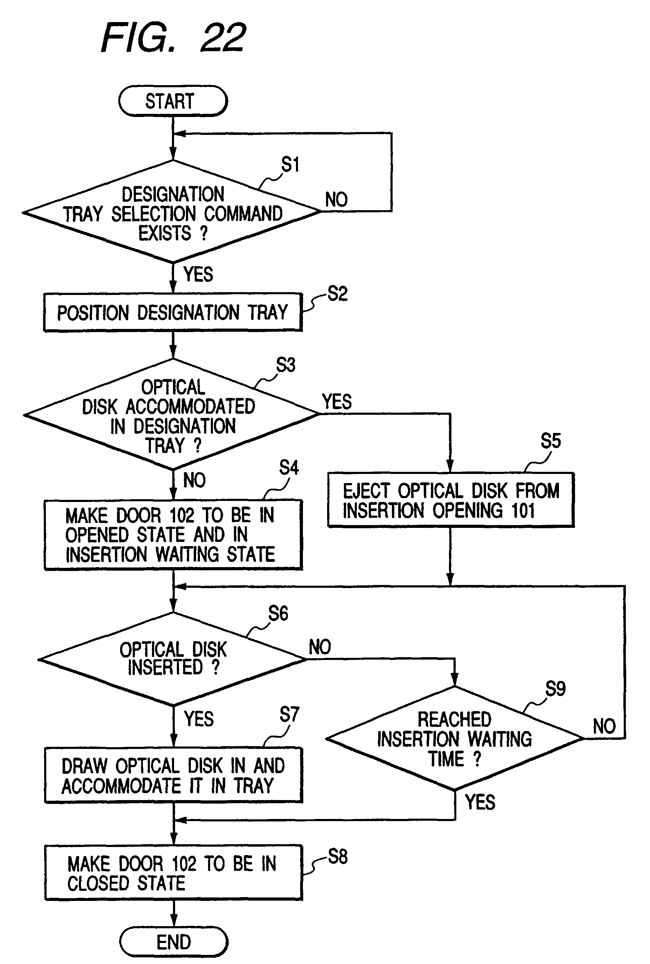

Next, according to Fig. 22, control operations which are conducted by the control section 600 when the operator conducts the designation tray selection command to accommodate a new optical disk in a desired tray 201 of the disk accommodating section 200, will be described.

Fig. 22 is a flow chart showing the control operations conducted by the control section 600 when the operator conducts the second command.

In Fig. 22, in step S1, the control section 600 detects whether the designation tray selection command exists or not. This is conducted as follows: when the operation section 700 receives the command from the operator, the control section 600 receives that command from the operation section 700, thereby, the existence of the designation tray selection command is detected.

In step S1, when the designation tray selection command from the operator exists, the control section 600 advances to step S2, and positions the tray 201 designated by the command.

The control section 600 advances to step S3, and judges whether the optical disk is accommodated in the designated tray 201, and when the optical disk is not accommodated in the designated tray 201, the control section 600 advances to step S4, and controls the door to the opened state, and the apparatus P1 to be in the optical disk insertion waiting state, simultaneously, resets a counter 601 and controls it to start the counting operation, and according to the counting operation of the counter 601, successively starts the measurement of the passage of time in the insertion waiting state, and advances to step S6.

Further, in step S3, when the optical disk is already accommodated in the designated tray 201, the control section 600 advances to step S5, and after the controls section 600 controls the door 102 to be in the opened state, controls the disk conveyance section 400 and conveys the optical disk to the insertion opening 101, and makes the optical disk to be in the state that the optical disk is ejected from the insertion opening 101 toward the outside of the apparatus (that is, the state that a portion of the optical disk is exposed to the outside from the insertion opening 101), thereby, a new optical disk insertion waiting state is obtained, and simultaneously, the counter 601 is reset, and the counting operation is stated, and according to the counting operation of the counter 601, the successive measurement of the passage of time in the insertion waiting state is started, and next the control section 600 advances to step S6.

In step S6, the control section 600 successively detects whether the optical disk is newly inserted from the insertion opening 101. This is conducted such that the control section 600 detects the optical disk inserted from the insertion opening 101, for example, by an optical sensor provided between the driving roller 401 and the insertion opening 101.

Incidentally, as described above, when the control section 600 advances from step S5 to step S6, the optical disk is in the state that the optical disk is ejected form the insertion opening 101 to the outside of the apparatus, and in this case, after the optical sensor detects that the optical disk is drawn out to the outside, the optical sensor detects again that the optical disk is inserted, thereby, the control section 600 can judge that the optical disk is newly inserted from the insertion opening 101. Incidentally, in this case, when the optical disk which is in the ejected state to the outside of the apparatus, is not drawn out but pushed in again to the insertion direction, the optical disk is also judged to be newly inserted.

In step S6, when the control section 600 judges that the optical disk is inserted, the control section 600 advances to step S7, and controls such that it rotates the driving roller 401 and draws the optical disk in the apparatus P1, and conveys the optical disk to the positioned tray 201, after that, the optical disk is carried on the disk carrying surface 201a and accommodated therein. Next, the control section 600 advances to step S8, and makes the door to be in the closed state, and the control ends (END).

On the one hand, in step S6, when the control section 600 judges that the optical disk is not inserted, the control section 600 advances to step S9, and judges whether the passage of time measured according to the counting operation of the counter 601 stated in preceding step S3, reaches a predetermined insertion waiting time, and when the measured passage of time does not yet reach the insertion waiting time, the control section 600 advances again to step S6 and conducts again the operations on and after.

Further, in step S9, when the measured passage of time reaches the insertion waiting time, the control section 600 judges that the operator has no intention to insert the disk, and advances to step S8, and makes the door 102 to be in closed state, thereby, the control section 600 controls to release the insertion waiting state, and the control ends (END). In this manner, normally, the optical disk is accommodated in the apparatus main body.

Next, an all-load function of the optical disk reproducing apparatus P1 in the present embodiment will be detailed.

In the all-load function in the present embodiment, when the operator commands the all-load command by the operation section 700, the control section 600 detects the tray 201 in which the optical disk can be accommodated, (the tray on which the optical disk is not placed), from each tray 201 of the disk accommodating section 200.

Next, in these trays, the lowermost tray is positioned to the insertion opening 101 and the door is opened, and the tray is made to be in the state that the optical disk can be inserted (that is, the optical disk insertion waiting state). Then, when the optical disk is inserted and conveyed onto the tray, the control section 600 detects the next lowermost tray (the next tray on which the optical disk is not placed), and repeats the above operations.

As described above, the auto-load function is a function by which each member is controlled such that, when the operator conducts the all-load command from the operation section 700, the trays on which the optical disks are not placed are successively positioned to the insertion opening.

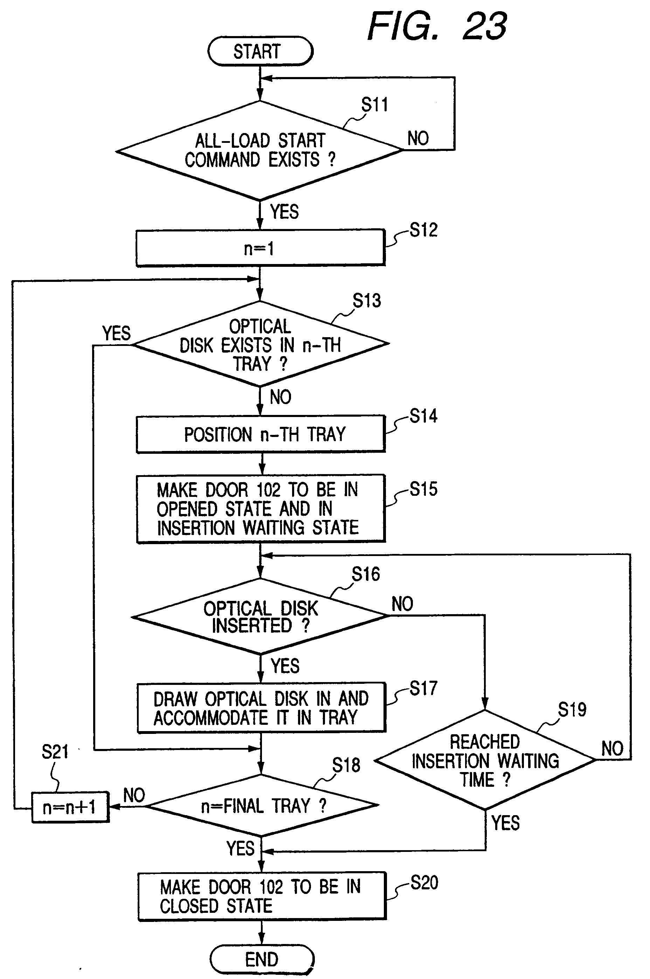

Next, the control operations which are conducted by the control section 600 when the operator accommodates a new optical disk in the disk accommodating section 200 by using the all-load function, will be described according to Fig. 23.

Fig. 23 is a flow chart showing the control operations conducted by the control section 600 when the operator conducts the all-load command.

In Fig. 23, in step S11, the control section 600 detects whether an all-load start command exists or not. This step is to detect that the all-load start command exists, by a method that the control section 600 receives that command from the operation section 700, when the operation section 700 receives the all-load command from the operator.

In step S11, when the all load start command exists, the control section 600 advances to step S12, and in order to detect the accommodating state of the optical disk of 6 trays 201 of the disk accommodating section 200, the tray 201 as the object to be detected, is set to the first tray (that is, the lowermost tray whose number is n = 1) 201, and next, the control section 600 advances to step S13.

In step S13, the control section 600 detects whether the optical disk is accommodated in the n-th tray (at present, the tray number n = 1) 201, which is set as the object to be detected, and when the optical disk is not accommodated, the control section 600 advances to step S14, and positions the tray 201.

Next, the control section 600 advances to step S15, and controls the door 102 to be in opened state, and thereby, makes the apparatus P1 to be in the optical disk insertion waiting state, and simultaneously, resets the counter and starts the counting operation, and according to the counting operation of the count 601, starts to successively measure the passage of time in the insertion waiting state, and advances to step S16.

In step S16, the control section 600 successively judges whether the optical disk is newly inserted. In the same as that in step S6 in previous Fig. 22, this is conducted by a method that the control section 600 detects the optical disk inserted from the insertion opening 101 by, for example, an optical sensor provided between the driving roller 401 and the insertion opening 101.

In step S16, when the control section 600 judges that the optical disk is inserted, the control section 600 advances to step S17, and rotates the driving roller 401 of the disk conveyance section 400, and draws the optical disk in the apparatus P1 and conveys the optical disk to the positioned tray 201.

In this case, when the control section 600 detects that the optical disk passes through the insertion opening 101, according to the detection output of the optical sensor, the control section 600 controls the door 102 so as to be in the closed state. According to this, while the disk conveyance section 400 conveys the optical disk which has passed through the insertion opening, because the insertion of the new optical disk from the insertion opening can be prevented, thereby, the optical disk on the conveyance is not damaged.

Next, the control section 600 controls the disk carrying surface 201a to carry the optical disk which is conveyed to the tray 201, onto the disk carrying surface 201a, and accommodate the optical disk on it, and after that, the control section 600 advances to step S18.

Further, in step S16, when the control section 600 judges that the optical disk is not inserted, the control section 600 advances to step S19, and judges whether the passage of time measured according to the counting operation of the counter 601 which is started in the previous step S15, reaches a predetermined insertion waiting time, and when it does not yet reach the insertion waiting time, the controls section 600 advances again to the above-described step S16, and conducts the operation on and after in the same manner.

Further, in step S19, when the passage of time reaches the insertion waiting time, the control section 600 judges that the operator has no intention to insert the optical disk, and advances to step S20, and makes the door 102 to be in closed state, thereby, the control section 600 controls to release the insertion waiting state, and the control ends (END).

On the one hand, in step S13, when the control section 600 detects that the optical disk is already accommodated in the n-th (at present, the tray number n = 1) tray 201, which is set to the object to be detected at the present, the control section 600 advances to step S18.

In step S18, the control section 600 detects whether the n-th tray 201 which is set to the object to be detected at the present, is the final tray which is the object to be detected, (that is, the uppermost tray whose number is n = 6), and when it is not the final tray, the control section 600 advances to step S21, and after the next tray (that is, (n + l)-th tray) 201 is re-set to the tray which is the object to be detected, (n-th tray), the control section 600 advances again to step S13, and conducts the operations on and after in the same manner.

As described above, by operating the all-load function, the operator makes the trays in which the optical disks are not accommodated, successively to be in the insertion waiting state, and by respectively inserting the optical disk from the insertion opening 101 within a predetermined insertion waiting time, the optical disks can be carried on all trays 201 of the disk accommodating section 200, and accommodated therein.

Incidentally, in the present embodiment, in step S13, when the disk exists on the tray, it is excluded from the object to be selected, however, the invention is not always limited to this, but, the all-load function may be operated to all trays. According to such the operation, when the replacement of the optical disk which is already accommodated, is desired to be simultaneously conducted, it is convenient.

Further, in step S19, when the time reaches to a predetermined optical disk insertion waiting time, the command of the all-load function is completed, however, the present invention is not always limited to this, but, it is also possible that the tray which have reached the insertion waiting time, is drawn into the apparatus and the all-load function is transferred to the insertion waiting state of the next tray. That is, in step S19, in the case of Yes, the all-load function can also be transferred to step S18. According to this, the operator can accommodate the optical disk in only the desired tray at any time.

Further, in the present embodiment, so-called slot in type recording medium reproducing apparatus, in which the optical disk is inserted from the insertion opening 101 and placed on and accommodated in each tray 201 of the disk accommodating section 200, is described, however, the recording medium reproducing apparatus of the present invention is not limited to this, but, each tray in the disk accommodating section may be structured so that it can be drawn out to the insertion opening.

Incidentally, in the above embodiment, the control section 600 positions the tray 201 to the insertion opening 101 by the tray positioning section 300, and makes the door 102 to be in the opened state, thereby, makes the apparatus P1 to be in the optical disk insertion waiting state, therefore, the operator can recognize that the apparatus P1 is in the optical disk insertion possible state, by the fact that the door 102 is open. However, the preset invention is not limited to this, but, in the case where the control section 600 controls the door 102 to be in the opened state, for example, the visual display by an LCD or LED or the sound annunciation by a buzzer may be combinedly used. According to this, the operator can more assuredly recognize that the apparatus P1 is in the optical disk insertion waiting state.

As described above, in the present embodiment, in order to accommodate the optical disk in the apparatus main body, the optical disk can be accommodated by 2 methods of the all-load command (the first command) and the designation tray selection command (the second command), and this is very excellent in the convenience property. Incidentally, for these commands, exclusive use command buttons may be provided in the operation section 700, or one button may be appropriately switched for use. Further, in the all-load function, when the designation tray selection command is conducted by the operator, the all-load function is completed, and the apparatus may also transfer to the operation of the designation tray selection command.

Further, in the present embodiment, the optical disk is described as an example of the recording medium, however, the recording medium is not limited to the optical disk, but the present invention can be applied for also the recording medium such as a tape or card.

Further, the accommodating means is described as the disk accommodating section 200 of a magazine type in which a plurality of trays can move in the upward and downward direction, however, the accommodating means is not limited to this, but, may also be a disk accommodating section having a shaft rotation type-rotary tray type on which a plurality of recording media can be horizontally placed.

According to the first aspect of the invention, there is provided a recording medium reproducing apparatus, which comprises: an insertion section having an insertion opening into which a recording medium is inserted; a recording medium accommodating means having a plurality of recording medium placement portions; a positioning means for positioning the insertion opening to each recording medium placement portion of the accommodating means; a conveyance means for conveying the recording medium inserted from the insertion opening into the recording medium accommodating means and accommodating it; and a control means for controlling the positioning means and the conveyance means, and which selects one recording medium from the recording media placed in respective recording medium placement portions of the accommodating means and reproduces the information recorded in the recording medium, and the recording medium reproducing apparatus is characterized in that: the control means detects one recording medium placement portion from the plurality of recording medium placement portions, controls the positioning means so that the recording medium placement portion is in a insertion waiting state in which the conveyance of the recording medium from the insertion portion and its accommodation can be carried out, corresponding to the detection, and in the insertion waiting state, when the recording medium is inserted from the insertion opening, the control means controls so that the recording medium is conveyed to and accommodated in the accommodating means by the conveyance means; and further, the control means controls the positioning means so that the recording medium placement portions, other than the one recording medium placement portion, in the plurality of recording medium placement portions provided in the accommodating means, are in the insertion waiting state. According to this, because the control section can detect the recording medium placement portion on which the recording medium is not placed, from a plurality of recording medium placement portions and make it in a insertion waiting state successively, because the operator only inserts the optical disk from the insertion opening of the apparatus which is in the insertion waiting state, each time successively, and can place the optical disk on each recording medium placement portion of the accommodating means, accordingly, the optical disks can be easily and collectively accommodated in the accommodating means.

Further, according to the second aspect of the invention, there is provided a recording medium reproducing apparatus, which comprises: an insertion section having an insertion opening into which a recording medium is inserted; a recording medium accommodating means having a plurality of recording medium placement portions; a positioning means for positioning the insertion opening to each recording medium placement portion of the accommodating means; a conveyance means for conveying the recording medium inserted from the insertion opening to the recording medium placement portion positioned by the positioning means and for accommodating it; an operation section which receives an operation instruction from the operator; and a control means for controlling the positioning means and the conveyance means, and which selects one recording medium from the recording media placed in respective recording medium placement portions of the accommodating means and reproduces the information recorded in the recording medium, and the recording medium reproducing apparatus characterized in that: when the control means receives the first command from the operation section, the control means detects one recording medium placement portion in which the recording medium is not accommodated, from the plurality of recording medium placement portions, and corresponding to the detection, the control means controls the positioning means so that the recording medium placement portion is in the insertion waiting state in which the recording medium can be conveyed from the insertion opening to the one recording medium placement portion and accommodated in it; and the one recording medium placement portion to the insertion opening is positioned; and when the recording medium is inserted from the insertion opening, in the insertion waiting state, the control means controls so that the recording medium is conveyed to and accommodated in the one recording medium placement portion, by the conveyance means; and further, when the other recording medium placement portion in which the recording medium is not yet accommodated, is detected in the plurality of recording medium placement portions, the control means controls the positioning means so that the other recording medium placement portion is in the insertion waiting state. According to this, when the operator designates an operation of the first command from the operation section, because the control section detects the recording medium placement portions in which the recording media are not accommodated, from a plurality of recording medium placement portions, and can make them an insertion waiting state successively, thereby, the operator only inserts each time the optical disk from the insertion opening of the apparatus which is successively in the insertion waiting state, and can place the optical disk on each recording medium placement portion of the accommodating means, accordingly, the optical disks can be easily and collectively accommodated in the accommodating means.

## Claims

1. A recording medium reproducing apparatus, comprising:
an insertion section having an insertion opening into which a recording medium is inserted;
recording medium accommodating means having a plurality of recording medium placement portions;
positioning means for positioning the insertion opening to each recording medium placement portion of the accommodating means;
conveyance means for conveying the recording medium inserted from the insertion opening into the recording medium accommodating means and accommodating it; and
control means for controlling the positioning means and the conveyance means, wherein one recording medium from the recording media placed on the respective recording medium placement portions of the accommodating means is selected and the information recorded in the recording medium is reproduced, and
wherein the recording medium reproducing apparatus characterized in that: the control means detects one recording medium placement portion from the plurality of recording medium placement portions; controls the positioning means so that the recording medium placement portion is in an insertion waiting state in which the conveyance of the recording medium from the insertion opening and its accommodation can be carried out, corresponding to the detection, and in the insertion waiting state, when the recording medium is inserted from the insertion opening, the control means controls so that the recording medium is conveyed to and accommodated in the accommodating means by the conveyance means, and further, the control means controls the positioning means so that the recording medium placement portions, other than the one recording medium placement portion, in the plurality of recording medium placement portions provided in the accommodating means, are in the insertion waiting state.

2. The recording medium reproducing apparatus according to claim 1, wherein the control means further includes a timer means to time an insertion waiting time in the insertion waiting state, and when the insertion waiting time exceeds a predetermined time, the control means controls to release the insertion waiting state.

3. The recording medium reproducing apparatus according to claim 1, wherein the insertion section further includes a block means, located near the insertion opening, for blocking the insertion of the recording medium from the insertion opening, and the control means controls the block means so as to release the blocking so that the recording medium can be inserted from the insertion opening, in the case of the insertion waiting state.

4. The recording medium reproducing apparatus according to claim 3, wherein, when the recording medium is inserted from the insertion opening and conveyed by the conveyance means and passes the insertion opening, the control means controls the block means so as to block the insertion of a new recording medium from the insertion opening.

5. A recording medium reproducing apparatus, comprising:
an insertion section having an insertion opening into which a recording medium is inserted;
recording medium accommodating means having a plurality of recording medium placement portions;
positioning means for positioning the insertion opening to each recording medium placement portion of the accommodating means;
conveyance means for conveying the recording medium inserted from the insertion opening to the recording medium placement portion positioned by the positioning means and for accommodating it;
an operation section which receives an operation command from an operator; and
control means for controlling the positioning means and the conveyance means, wherein one recording medium from the recording media placed in respective recording medium placement portions of the accommodating means is selected and the information recorded in the recording medium is reproduced, and
wherein when the control means receives a first command from the operation section, the control means detects one recording medium placement portion in which the recording medium is not accommodated, from the plurality of recording medium placement portions; and corresponding to the detection, the control means controls the positioning means so that the recording medium placement portion is in an insertion waiting state in which the recording medium can be conveyed from the insertion opening to and accommodated in the one recording medium placement portion, and the one recording medium placement portion and the insertion opening are positioned to each other, and when the recording medium is inserted from the insertion opening, in the insertion waiting state, the control means controls so that the recording medium is conveyed to and accommodated in the one recording medium placement portion, by the conveyance means; and further, when the other recording medium placement portion in which the recording medium is not yet accommodated, is detected in the plurality of recording medium placement portions, the control means controls the positioning means so that the other recording medium placement portion is in the insertion waiting state.

6. The recording medium reproducing apparatus according to claim 5, wherein the control means further includes a timer means to time an insertion waiting time in the insertion waiting state, and when the insertion waiting time exceeds a predetermined time, the control means controls to release the insertion waiting state.

7. The recording medium reproducing apparatus according to claim 5, wherein the insertion section further includes a block means, located near the insertion opening, for blocking the insertion of the recording medium from the insertion opening, and the control means controls the block means so as to release the blocking so that the recording medium can be inserted from the insertion opening, in the case of the insertion waiting state.

8. The recording medium reproducing apparatus according to claim 7, wherein, when the recording medium is inserted from the insertion opening and conveyed by the conveyance means and passes the insertion opening, the control means controls the block means so as to block the insertion of a new recording medium from the insertion opening.

9. The recording medium reproducing apparatus according to claim 5, wherein, when the control means receives a second command from the operation section, the control means detects the recording medium placement portion designated by the second command, and correspond to the detection, the control means controls the positioning means so as to obtain the insertion waiting state in which the recording medium can be conveyed from the insertion opening to the recording medium placement portion and accommodated in it, and positions the recording medium placement portion to the insertion opening; and when the recording medium is inserted from the insertion opening, in the insertion waiting state, the control means controls so that the recording medium is conveyed to and accommodated in the recording medium placement portion, by the conveyance means, thereby, the control means releases the insertion waiting state according to the second command.
